# EUROPEAN PATENT SPECIFICATION

(11) **EP 2 331 717 B1**
(45) Date of publication and mention of the grant of the patent: **15.08.2012**
(21) Application number: 09736787.4
(22) Date of filing: 18.09.2009
(51) Int. Cl.: C22B 7/04, C22B 15/00, C22B 1/04

(54) **METHOD FOR RECYCLING OF SLAG FROM COPPER PRODUCTION**
VERFAHREN ZUR REZYKLIERUNG VON SCHLACKE AUS DER KUPFERHERSTELLUNG
PROCÉDÉ DE RECYCLAGE DE LAITIERS LORS DE LA PRODUCTION DE CUIVRE

(30) Priority: 23.09.2008 BG 11022308
(43) Date of publication of application: 15.06.2011
(73) Proprietor: Gyurov, Georgi Atanasov, 1592 Sofia (BG); Georgiev, Chavdar Georgiev, 1000 Sofia (BG); Belomorski, Mitko Hristov, 1202 Sofia (BG); Gyurov, Stoyko Atanasov, 1784 Sofia (BG)
(72) Inventor: Gyurov, Georgi Atanasov, 1592 Sofia (BG); Georgiev, Chavdar Georgiev, 1000 Sofia (BG); Belomorski, Mitko Hristov, 1202 Sofia (BG); Gyurov, Stoyko Atanasov, 1784 Sofia (BG)
(74) Representative: Lekova, Tatyana Boyanova
(86) International application number: PCT/BG2009/000016
(87) International publication number: WO 2010/034085

(56) References cited:
- CA-A1- 2 363 969
- DE-A1- 19 946 326
- US-A- 3 890 139
- US-A- 4 515 631

## Description

### Field of the invention

The invention relates to a waste-free method for recycling slag from copper production to iron oxide concentrate, alkali metal silicate or a solution of silicon in alkali metal hydroxide, which can be used for production of water glass. The method includes both recycling copper ores flotation residues and recycling slag from copper production using the pyrometallurgical method.

### Background of the invention

In the production process of copper large amounts of solid waste products (slag) mainly containing iron silicate - fayalite (2FeO.SiO₂), aluminium oxide, calcium oxide as well as lead, zinc, copper and molybdenum, arsenic and selenium presenting in less than 1 percent concentration is generated. The waste products deposition into the environment causes serious environmental problems and depots maintenance operations require significant expenses.

It is well-known that the fayalite (2FeO.SiO₂) is resistant to dilute acids and hydroxides. Concentrated acids and hydroxides dissolve copper slag, but unfortunately this process is accomplished with high reagents consumption. On the other hand, the alkali metals (Na, K) react with silicon dioxide (silica) (SiO₂) forming water-soluble silicates. Actually, under oxidation conditions the fayalite (2FeO.SiO₂) is transformed into a mechanical mixture of oxides (Fe₂O₃, Fe₃O₄ and SiO₂).

DE 199 46 326 illustrates a fayalite slag recycling method that includes: treating the granulated slag with sulfuric acid, oxidation of ferrous compounds in slag at temperature from 550 to 750 °C for 1-4 hours, slag filtration using water at room temperature and dissolution of nonferrous metals -Zn, Cu.

This method does not provide extraction of ferrous components and in that case a need exists for deposition of production waste, relating with expenses for depot maintenance, and negatively impact of those depots to environment.

### Technical description of the invention

The aim of the present invention is to develop a technology for recycling solid waste from copper production into useful products: iron concentrate and alkali metal silicate or a solution of silicon in alkali metal hydroxide, which can be used as source of water glass production, thus avoiding depots expenses of this waste and their negatively environmental impact.

The aim has been achieved developing waste-free method for recycling slag from copper production consists of four basic steps:
1. Oxidation of the fayalite in slag to a mixture of magnetite, hematite and silicon dioxide;
2. Treating the mixture of magnetite, hematite and silicon dioxide with hydroxide or carbonate of alkaline metal in temperature from 400 to 1100 °C until obtaining the reaction product - a mixture of Fe₂O₃, Fe₃O₄ and alkali metal silicate;
3. Treating of the obtained product with water at temperatures 90-250°C and pressure 0.1-4 MPa till obtaining a solid residue of iron oxides, a solution of silicon in alkali metal hydroxide and/or alkali metal silicate;
4. Separation of iron oxides from the solution with or without washing up the solid residue with water or aqueous solution to 0.25 M mineral acid - HCl, H₂SO₄.

The aim is achieved also using a fayalite slag recycling method, characterizing with the process of oxidation of the fayalite in air at temperature 700-1100 °C and 3-5 hours duration. After the fayalite oxidation an aqueous solution of an alkali metal hydroxide or carbonate is added to the slag, the mixture is heated to temperature 150 to 250 °C and pressure 0.6 to 4 MPa. In this condition the silicate phase is dissolved in an aqueous solution, the undissolved particles are removed by precipitation or filtration, washed up with water or aqueous solution of up to 0.25 M mineral acid - hydrochloric and sulfuric acid.

As e result of these four basic steps an iron oxide concentrate and alkali metal silicate or a solution of silicon in alkali metal hydroxide which can be used as source of water glass production are obtained.

The chemical and granulometric composition of the produced iron concentrate are suitable for pelletization and are useful for production of cast-iron or iron ferroalloys.

The fayalite oxidation is carried out in air atmosphere in presence or absence of oxygen. Oxidation temperatures are from 700 to 1 100°C and with duration of 3-5 hours. The following reactions take place:

3FeO^{.}SiO₂+1/2O₂→Fe₂O₃+SiO₂ (1)

2FeO.SiO₂+1/3O₂→2/3Fe₃O₄+SiO₂ (2).

The oxidation can be conducted in crucible, shaft or rotary furnace with or without mixing operation. The slag is in a powder form with grain sizes from 10 to 30 µm, which provides intensive running of the process. Larger particles can also be oxidized, but the intensity of the process will decrease.

Some of the listed compounds are added into the oxidized particles: sodium carbonate Na₂CO₃, potassium carbonate K₂CO₃, sodium hydroxide NaOH, potassium hydroxide KOH. The mixture is heated up to temperatures from 400 to 1100°C and it is mixed intensively at isothermal conditions for a predetermined period of time in order for the following reactions to occur:

M₂CO₃+x SiO₂=M₂O•x SiO₂+CO₂ (3)

2MOH+x SiO₂=M₂O•x SiO₂+H₂O (4),

where M is sodium (Na) or potassium (K).
The obtained product is a mixture of Fe₂O₃, Fe₃O₄ and alkali metal silicate - M₂O*xSiO₂ or a solution of silicon in listed compounds. This product is mixed with water at temperatures 90-250 °C and pressure 0.1-4 MPa, the silicate particles are dissolved in the aqueous solution, and the undissolved ferrous oxides are removed by precipitation or filtration, washed up with water or aqueous solution of up to 0.25 M mineral acid - hydrochloric and sulfuric acid

One of the listed compounds is added into the oxidized particles slag: sodium carbonate Na₂CO₃, potassium carbonate K₂CO₃, sodium hydroxide NaOH, potassium hydroxide KOH and water, the mixture is heated to temperature 150 to 250 °C and pressure 0.6 to 4 MPa, the silicate particles are dissolved in the aqueous solution, then undissolved ferrous oxides are removed by precipitation or filtration and washed up with water or aqueous solution of up to 0.25 M mineral acid - hydrochloric and sulfuric acid.

The advantages of the invention method are in a recycling solid waste from copper production into useful products: iron concentrate and alkali metal silicate or a solution of silicon in alkali metal hydroxide which can be used as source of water glass production, thus avoiding depots expenses and their negatively environmental impact.

### Examples

| Nº | Raw material g | Reagent g | Tₒₓ °C | tₒₓ h | T_{synt} °C | T_{diss} °C | t_{diss} h | P_{diss} MPa | Ratio L/S |
|---|---|---|---|---|---|---|---|---|---|
| 1 | 100 | Na₂CO₃ 30 | 1000 | 4 | 1000 | 160 | 6 | 0.62 | 3 |
| 2 | 100 | NaOH 40 | 1000 | 4 | - | 160 | 6 | 0.62 | 4 |
| 3 | 100 | NaOH 20 | 1000 | 4 | - | 160 | 6 | 0.62 | 4 |
| 4 | 100 | NaOH 20 | 800 | 4 | 1000 | 160 | 6 | 0.62 | 3 |
| 5 | Solid residue from example II | NaOH Already used solution from example II | - | | - | 160 | 6 | | 4 |

### Example I

100 g slag from copper production with composition in wt. % was treated:

| FeO | MgO | CaO | MnO | SiO₂ | Al₂O₃ | Na₂O | K₂O | TiO₂ |
|---|---|---|---|---|---|---|---|---|
| 50.93 | 1.43 | 1.39 | <0.01 | 31.26 | 6.93 | 3.02 | 1.74 | 0.22 |

The iron is in the form of fayalite 2FeO.SiO₂. The slag is oxidized in air at temperature 1000 °C for 4 hours. The composition of oxidized product is:

| FeO | MgO | CaO | MnO | SiO₂ | Al₂O₃ | Na₂O | K₂O | TiO₂ |
|---|---|---|---|---|---|---|---|---|
| 57.82 | 1.13 | 1.55 | <0.01 | 31.90 | 4.00 | 6.6 | 82.59 | 0.15 |

The oxidized product is mixed with 30g Na₂CO₃ and continuously stirred, kept at 1000 °C for 3 h in order to allow the synthesis to proceed. The obtained product, a mixture of iron oxides and sodium silicate and/or a solution of silicon in sodium hydroxide, is mixed with water in the ratio 1:3 and is heated up to 160 °C, continuously stirred-keeping the temperature constant for 6 h. After the process end the solution is filtered and washed with water.

The chemical composition of the residue is:

| FeO | MgO | CaO | MnO | SiO₂ | Al₂O₃ | Na₂O | K₂O | TiO₂ |
|---|---|---|---|---|---|---|---|---|
| 67.92 | 0.71 | 1.34 | <0.01 | 23.62 | 3.28 | 1.98 | 0.78 | 0.12 |

### Example II

100 g slag from copper production with composition in wt. % was treated:

| FeO | MgO | CaO | MnO | SiO₂ | Al₂O₃ | Na₂O | K₂O | TiO₂ |
|---|---|---|---|---|---|---|---|---|
| 50.93 | 1.43 | 1.39 | - | 31.26 | 6.93 | 3.02 | 1.74 | 0.22 |

The iron is under form of fayalite 2FeO.SiO₂. The slag is oxidized in air at temperature 1000 °C for 4 hours. The oxidized product's composition is:

| FeO | MgO | CaO | MnO | SiO₂ | Al₂O₃ | Na₂O | K₂O | TiO₂ |
|---|---|---|---|---|---|---|---|---|
| 53.99 | 1.86 | 1.69 | - | 29.39 | 6.81 | 3.46 | 1.44 | 0.15 |

The oxidized product is mixed with 40g NaOH and 400 ml water. Then it is than put into the autoclave and heat up to 160°C at continuously stirring, keeping the temperature constant for 6 h. After the end of the process the solution is filtered. The solid residue is washed with aqueous solution of 0.25M mineral acid - HCl.

The chemical composition of the residue is:

| FeO | MgO | CaO | MnO | SiO₂ | Al₂O₃ | Na₂O | K₂O | TiO₂ |
|---|---|---|---|---|---|---|---|---|
| 75.02 | - | 0.49 | - | 21.49 | 2.57 | <0.01 | 0.10 | 0.19 |

### Example III

100 g slag from copper production with composition in wt % was treated:

| FeO | MgO | CaO | MnO | SiO₂ | Al₂O₃ | Na₂O | K₂O | TiO₂ |
|---|---|---|---|---|---|---|---|---|
| 50.93 | 1.43 | 1.39 | - | 31.26 | 6.93 | 3.02 | 1.74 | 0.22 |

The iron is under form of fayalite 2FeO.SiO₂. The slag is oxidized in air at temperature 1000°C for 4 hours. The composition of oxidized product is:

| FeO | MgO | CaO | MnO | SiO₂ | Al₂O₃ | Na₂O | K₂O | TiO₂ |
|---|---|---|---|---|---|---|---|---|
| 53.99 | 1.86 | 1.69 | - | 29.39 | 6.81 | 3.46 | 1.44 | 0.15 |

The oxidized product is mixed with 20g NaOH and 400 ml water. Then it is put into the autoclave and heat up to 160°C at continuously stirring, keeping the temperature constant for 6 h. After the end of the process the solution is filtered. The solid residue is washed up with aqueous solution of 0.25M mineral acid - H₂SO₄.

The chemical composition of the residue is:

| FeO | MgO | CaO | MnO | SiO₂ | Al₂O₃ | Na₂O | K₂O | TiO₂ |
|---|---|---|---|---|---|---|---|---|
| 70.81 | 0.42 | 1.13 | 2.50 | 20.34 | 1.78 | - | - | 0.23 |

### Example IV

100 g slag from copper production with composition in wt % was processed:

| FeO | MgO | CaO | MnO | SiO₂ | Al₂O₃ | Na₂O | K₂O | TiO₂ |
|---|---|---|---|---|---|---|---|---|
| 50.93 | 1.43 | 1.39 | <0.01 | 31.26 | 6.93 | 3.02 | 1.74 | 0.22 |

The iron is under form of fayalite 2FeO.SiO₂. The slag is oxidized in air at temperature 800°C for 4 hours. The composition of oxidized product is:

| FeO | MgO | CaO | MnO | SiO₂ | Al₂O₃ | Na₂O | K₂O | TiO₂ |
|---|---|---|---|---|---|---|---|---|
| 55.62 | 0.87 | 1.77 | 0.42 | 38.13 | 2.23 | 2.78 | 0.71 | 0.06 |

The oxidized product is mixed with 20g NaOH and continuously stirring to keep it at 1000 °C for 3 h in order to provide the synthesis to proceed. The produced product, a mixture of iron oxides and sodium silicate and/or silicon solution in sodium hydroxide solution is mixed with water in the ratio 1:3 and is heated up to 160°C in autoclave at continuously stirring, keeping the temperature constant for 6 h. After the end of the process the solution is filtered and washed up with water. The residue's chemical composition is:

| FeO | MgO | MnO | CaO | SiO₂ | Al₂O₃ | Na₂O | K₂O | TiO₂ |
|---|---|---|---|---|---|---|---|---|
| 63.20 | 1.15 | <0.01 | 1.81 | 28.85 | 2.27 | 1.92 | 0.66 | <0.01 |

### Example V

100 g residue from example II with composition in wt % was treated:

| FeO | MgO | CaO | MnO | SiO₂ | Al₂O₃ | Na₂O | K₂O | TiO₂ |
|---|---|---|---|---|---|---|---|---|
| 75.02 | - | 0.49 | - | 21.49 | 2.57 | <0.01 | 0.10 | 0.19 |

The residue is mixed with the solution from example II in the ratio 1:4 and then it is put into the autoclave and heat up to 160 °C, continuously stirring keeping the temperature constant for 6 h. After the end of the process the solution is filtered and the solid residue is washed up with aqueous solution of 0.15M mineral acid - HCl.

The chemical composition of the residue is:

| FeO | MgO | CaO | MnO | SiO₂ | Al₂O₃ | Na₂O | K₂O | TiO₂ |
|---|---|---|---|---|---|---|---|---|
| 86.69 | 0.97 | 0.87 | <0.01 | 6.163 | 3.04 | 1.92 | <0.01 | 0.16 |

## Claims

1. Method for recycling slag from copper production containing iron silicate-fayalite, comprising the steps of: oxidation of the fayalite in air at oxidation temperature 700 to 1100 °C for 3 to 5 hours; an alkali metal hydroxide or carbonate is added and the mixture is treated to a mixture of silicate and iron oxides; this mixture product is mixed with water and then heated up to 100°C at atmospheric pressure or 150-250 °C at a pressure between 0.6-4 MPa, which results in dissolution of silicate in the aqueous solution, the undissolved iron oxides are separated by precipitation or filtration, and then are washed up with water or aqueous solution up to 0.25M mineral acid - hydrochloric or sulfuric acid.

2. Method according to a claim 1 **characterized in that** one of the following compounds is added to the oxidized fayalite: sodium carbonate, potassium carbonate, sodium hydroxide, potassium hydroxide, the mixture is heated up to a temperature from 400 to 1100 °C and is intensively stirred under isothermal conditions until obtaining a mixture of iron oxides and silicate or a solution of silicon in the listed compounds.

3. Method for recycling slag from copper production containing iron silicate - fayalite, comprising the steps of: fayalite oxidation upon air exposure at temperature from 700 to 1100 °C and 3 to 5 hours duration, an alkali metal hydroxide or carbonate and water are added in quantities assuring pH of the solution up to 10 and the mixture is heated up to temperatures from 150 to 250 °C at pressure 0.6 to 4 MPa, which results in dissolution of silicate in the aqueous solution, the undissolved iron oxides are separated by precipitation or filtration, and then are washed up with water or aqueous solution of up to 0,25M mineral acid - hydrochloric or sulfuric acid.

## Patentansprüche

1. Verfahren zur Recyklierung der Schlacken von der Kupferverhüttung, die Eisensilikat, d. h. Fayalit enthalten. Das Verfahren wird in folgenden Schritten durchgeführt: das Fayalit wird an der Luft bei Oxidationstemperatur von 700° bis 1100° C und Bearbeitungszeit von 3 Stunden oxidiert. Dem oxidierten Fayalit werden Hydroxid oder Karbonat eines Alkalimetalles zugegeben und die Mischung wird bis zur Erhaltung eines Gemisches aus Silikat und Eisenoxiden bearbeitet. Dieses Stoffgemisch wird mit Wasser vermengt und unter Atmosphärendruck bei Temperatur bis 100° C, bzw. unter 0.6 bis 1.5 MPa Luftdruck und 150 bis 250° C erhitzt. Dabei geht das Silikat in eine Wasserlösung über, die ungelösten Eisenoxide werden abgelagert oder durch Filtration abgesondert und danach mit Wasser oder wässriger Lösung einer Mineralsäure (Salz- oder Schwefelsäure) bis 0.25 M abgespült.

2. In Bezug auf den Patentanspruch 1 ist das Verfahren dadurch charakterisiert, dass man dem oxidierten Fayalit eine der Verbindungen Natriumkarbonat, Kaliumkarbonat, Natriumbase oder Kaliumbase zugibt, das erhaltene Stoffgemisch bei 400 bis 1100° C erhitzt, indem man es unter isothermischen Bedingungen intensiv bis zur Erhaltung der Mischung von Eisenoxiden und Silikat oder einer Lösung des Siliziums in den erwähnten Verbindungen umrührt.

3. Verfahren zur Recylclierung der Schlacken von der Kupferverhüttung, die Eisensilikat, d. h. Fayalit enthalten. Das Verfahren wird in folgenden Schritten durchgeführt: das Fayalit wird an der Luft bei Oxidationstemperatur von 700° bis 1100° C und Bearbeitungszeit von 3 bis 5 Stunden oxidiert. Dem oxidierten Fayalit werden Hydroxid oder Karbonat eines Alkalimetalles wie auch Wasser in solchen Mengen zugegeben, die der Lösung bis 10 pH sichern, und die Mischung wird bis Temperaturen von 150 bis 250°C unter Druck 0.6 bis 4 MPa erhitzt, wobei das Silikat in eine Wasserlösung übergeht und die ungelösten Eisenoxide durch Ablagerung oder Filtration abgesondert und danach mit Wasser oder wässriger Lösung einer Mineralsäure bis 0.25M (Salz- oder Schwefelsäure) abgespült werden.

## Revendications

1. Méthode de recyclage des scories lors de la production de cuivre, contenantes du silicate de fer - fayalite, qui comprend les étapes suivantes: la fayalite est oxydée par l'air lors d'une température d'oxydation de 700" jusqu'à 1100°C pour un temps de 3 à 5 heures. On ajoute de l'hydroxide ou du carbonate d'un métal alcalin vers la fayalite oxidée et le mélange obtenu est traité pour produire un mélange de silicate et des oxydes de fer. Le produit obtenu est mélangé avec de l'eau et chauffé à 100°C lors de la pression atmosphérique ou bien lors d'une pression de 0.6 à 1.5 MPa jusqu'une température de 150 à 250°C, et alors le silicate se transforme en une solution aqueuse. Les oxydes ferreux qui ne sont pas dissous sont éliminés par précipitation ou par filtration, après quoi on rince avec de l'eau ou bien avec une solution aqueuse 0.25M d'une acide inorganique - acide chlorhydrique ou acide sulfurique.

2. Méthode d'après la revendication 1, **caracterisée par le fait qu'**on rajoute vers la fayalite oxydée quelques-uns des composés suivants: carbonate de sodium, carbonate de potatium, l'hydroxyde de sodium, l'hydroxyde de potatium. Le mélange obtenu est chauffé jusqu'une température de 400 à 1100°C, et alors le mélange est remué intensivement lors des conditions isothermiques jusqu'à l'obtention d'un mélange des oxydes de fer et du silicate ou bien de la solution de silicium dans des composés énumérés.

3. Méthode de recyclage des scories lors de la production de cuivre, contenantes du silicate de fer - fayalite, qui comprend les étapes suivantes: la fayalite est oxydée par l'air lors d'une température d'oxydation de 700° jusqu'à 1100°C pour un temps de 3 à 5 heures. On ajoute de l'hydroxide ou du carbonate d'un métal alcalin et de l'eau dans des quantitées qui assurent un pH de la solution jusqu'à 10, et le mélange est chauffé à des températures de 150 jusqu'à 250°C pour une pression de 0.6 à 4 MPa, et alors le silicate se transforme en solution aqueuse. Les oxydes ferreux qui ne sont pas dissous sont éliminés par précipitation ou par filtration, après quoi on rince avec de l'eau ou bien avec une solution aqueuse 0.25M d'une acide inorganique - acide chlorhydrique ou acide sulfurique.
